## Europäisches Patentamt

## European Patent Office

## Office européen des brevets

(19)

(11) Veröffentlichungsnummer: **0 139 819**
**A2**

(12) ## EUROPÄISCHE PATENTANMELDUNG

(21) Anmeldenummer: **84104147.8**

(22) Anmeldetag: **12.04.84**

(51) Int. Cl.⁴: **B 23 B 45/14**

(30) Priorität: **29.10.83 DE 3339438**

(43) Veröffentlichungstag der Anmeldung:
**08.05.85 Patentblatt 85/19**

(84) Benannte Vertragsstaaten:
**AT CH DE FR GB LI NL**

(71) Anmelder: **Wolff, Robert**
**Im Kiesacker 12**
**D-5446 Engeln(DE)**

(72) Erfinder: **Wolff, Robert**
**Im Kiesacker 12**
**D-5446 Engeln(DE)**

(74) Vertreter: **Peerbooms, Rudolf, Dipl.-Phys.**
**Postfach 200 208 Dickmannstrasse 45C**
**D-5600 Wuppertal 2(DE)**

(54) **Arbeitsständer für eine Handbohrmaschine.**

(57) Ein Arbeitsständer (1) für eine Handbohrmaschine (9) mit einem auf einer Säule (3) höhenverstellbaren Lagerbock (5), einer um eine horizontale Achse schwenkbar am Lagerbock (5) gelagerten Führungsplatte (6), einem in einer prismatischen Führungsbahn (25) der Führungsplatte (6) verschiebbaren Hubschlitten (7) und einem um eine horizontale Achse schwenkbar am Hubschlitten (7) gelagerten Maschinenhalter (8) soll um beide Drehachsen bis zu einer vollen Umdrehung stufenlos verstellbar sein, in festgestelltem Zustand große Drehmomente aufnehmen können, eine geringe Baugröße aufweisen und einfach herstellbar sein.

Zur Lösung dieser Aufgabe ist erfindungsgemäß vorgesehen, daß die Führungsplatte (6) und der Maschinenhalter (8) jeweils mit einem kegelstumpfförmigen, nach außen hin breiter werdenden Lagerzapfen (15, 37) in zugeordneten, konischen Drehlagern (16, 36) am Lagerbock (5) bzw. Hubschlitten (7) gelagert sind.

FIG.1

EP 0 139 819 A2

0139819

Patentanmeldung

Anmelder : Robert Wolff

5446 Engeln

Arbeitsständer für eine Handbohrmaschine

Die Erfindung betrifft einen Arbeitsständer für eine
Handbohrmaschine mit einem auf einer Säule höhenverstellbaren Lagerbock, einer um eine horizontale Achse
schwenkbar am Lagerbock gelagerten Führungsplatte,
einem in einer prismatischen Führungsbahn der Führungsplatte verschiebbaren Hubschlitten und einem um eine
horizontale Achse schwenkbar am Hubschlitten gelagerten
Maschinenhalter.

Derartige Arbeitsständer, die neben einer senkrechten
Verstellbarkeit auch eine zweifache Schwenkbarkeit
aufweisen, erlauben eine Vielzahl verschiedener Arbeitsgänge. Außer dem üblichen senkrechten ist auch ein waagerechtes oder schräges Bohren sowie ein waagerechtes, senkrechtes oder schräges Fräsen möglich. Vor allem bei Fräsarbeiten können dabei an den beiden Schwenkachsen große Drehmomente auftreten, die durch besonders stabile Feststelleinrichtungen aufgefangen werden müssen.

Durch die DE-PS 30 40 651 ist ein Arbeitsständer bekannt, bei dem zur Feststellung einer Drehung um eine horizontale Achse zwei vertikale Kreisflächen mit Stirnverzahnungen aufeinandergepreßt werden. Diese Einrichtung erlaubt ein beliebiges Verschwenken bis zu einer vollen Umdrehung. Neben der Stirnverzahnung muß jedoch ein gesondertes Führungslager zur Zentrierung der Drehachse vorgesehen sein; außerdem ist nur eine stufenweise Verstellung möglich.

Weiterhin sind Arbeitsständer bekannt, bei denen zwei kreisförmige, glatte Stirnflächen mit Hilfe von Schrauben aufeinandergepreßt werden, welche in bogenförmigen Führungsschlitzen laufen. In diesem Falle ist zwar eine kontinuierliche Schwenkbewegung möglich, doch können die Führungsschlitze aus Festigkeitsgründen sich allenfalls über einen Bogen von etwa 90° erstrecken; d. h. der Schwenkwinkel ist stark begrenzt. Um ein ausreichendes Feststellmoment zu erzielen, müssen weiterhin die aufeinandergepreßten Flächen einen großen Durchmesser aufweisen.

0139819

Durch die DE-PS 30 40 651 ist schließlich - hier allerdings in Bezug auf die Säule - eine Schwenkeinrichtung bekannt, bei der ein zentraler Zapfen oder dgl. von zwei halben Zylinderschalen umfaßt wird, die durch Schrauben aneinandergepreßt und somit auf dem Zapfen festgeklemmt werden können. Bei dieser Ausführungsform ist eine kontinuierliche Schwenkbewegung bis hin zu einer vollen Umdrehung möglich. Zur Erzielung von ausreichenden Klemmkräften müssen die Halbzylinderschalen jedoch eine relativ große Länge aufweisen, was im Falle eines Arbeitsständers mit zwei horizontalen Schwenkachsen zu einer übermäßigen Baugröße führen würde.

Der Erfindung liegt die Aufgabe zugrunde, einen gattungsgemäßen Arbeitsständer zu schaffen, der um beide Drehachsen bis zu einer vollen Umdrehung stufenlos verstellbar ist, der in festgestelltem Zustand große Drehmomente aufnehmen kann, der eine geringe Baugröße aufweist und der einfach herstellbar ist.

Diese Aufgabe ist erfindungsgemäß dadurch gelöst, daß die Führungsplatte und der Maschinenhalter jeweils mit einem kegelstumpfförmigen, nach außen hin breiter werdenden Lsgerzapfen in zugeordneten, konischen Drehlagern am Lagerbock bzw. Hubschlitten gelagert sind. Eine derartige konische Drehführung ist in beliebigen Winkeln stufenlos verstellbar. Im Hinblick auf die Feststellung der Drehung liegt der entscheidende Vorteil darin, daß sich durch die Keilwirkung der konischen Lagerflächen schon bei einer geringen Baulänge hohe Klemmomente erzielen lassen. Schließlich sorgt die konische Lagerführung für eine Zentrierung der Drehachse, so daß keine zusätzlichen Zentriereinrichtungen wie Führungsstege oder dgl. vorgesehen sein müssen. Die beiden Schwenkvorrichtungen sind daher mit einem vergleichsweise geringen Fertigungsaufwand herstellbar.

Der Erfindung zufolge können der Lagerbock und der Hubschlitten jeweils aus zwei parallel zu ihrer Verschieberichtung und zur Achse des konischen Drehlagers geteilten und unter Einfassung jeweils eines der Lagerzapfen zusammengespannten Gehäuseteilen mit jeweils einer halben Konusschale bestehen. Bei einem Aufbau des Lagerbocks und des Hubschlittens aus zwei Gehäuseteilen ist die Montage der kegelstumpfförmigen, nach außen hin breiter werdenden Lagerzapfen völlig unproblematisch. Durch eine Variation der Spannkräfte zwischen den beiden Gehäuseteilen besteht zudem die Möglichkeit, das Spiel der konischen Drehlager zu variieren und damit eine Feststellung bzw. ein Lösen der Lagerzapfen zu bewirken.

- 5 -

Nach einer bevorzugten Ausführungsform der Erfindung können die Konusschalen der beiden Gehäuseteile durch eine oder mehrere, eng an den Konusschalen vorbeiführende Spannschrauben betriebsmäßig an dem Lagerzapfen festspannbar bzw. von diesem lockerbar sein. Durch derartige Spannschrauben sind die Spannkräfte zwischen den beiden Gehäuseteilen in bequemer Weise stufenlos variierbar, d. h. durch eine Veränderung des radialen Spiels der konischen Drehlager können die Lagerzapfen festgespannt bzw. gelockert werden. Aufgrund der hohen Klemmomente genügen dabei geringe Verstellwege, um eine ausreichende Festspannung der Lagerzapfen zu erreichen.

In Ausgestaltung der Erfindung kann der Lagerzapfen des Maschinenhalters an seinem freien Ende ein koaxiales Schneckenrad tragen, in das eine im Hubschlitten gelagerte Verstellschnecke eingreift. Nach dem Lösen der Festklemmung kann damit der Maschinenhalter gegenüber dem Hubschlitten in besonders feinfühliger Weise verdreht werden, wobei auch schwerere Maschinen beim Verstellvorgang nicht aus dem Maschinenhalter herausgezogen zu werden brauchen. Da aber bei Schneckenrädern stets ein gewisses Flankenspiel vorhanden ist, muß auch hier der Lagerzapfen des Maschinenhalters während eines Arbeitsvorgangs festgestellt werden. Die vorbeschriebene Verstellmöglichkeit über ein Schneckenrad und eine Verstellschnecke ist nicht zwingend

erforderlich, da nach leichtem Lösen der Lagerzapfen-
Festklemmung der gesamte Maschinenhalter auch von Hand
in die gewünschte neue Position geschwenkt werden kann.

Nach einer weiteren Ausführungsform der Erfindung kann
der kegelstumpfförmige Lagerzapfen der Führungsplatte
durch eine zentrale axiale Schraube an die Führungsplatte angeschraubt sein, kann das Betätigungsende der
Schraube von der Seite her zwecks Anbringung eines Drehwerkzeuges oder Drehgriffes zugänglich sein und kann der
Lagerzapfen durch Betätigen der Schraube betriebsmäßig
im Drehlager festspannbar oder lockerbar sein. Bei dieser
Ausführungsform der Erfindung erfolgt das Festspannen der
Lagerzapfen nicht durch eine Veränderung des Drehlagers,
sondern durch eine axiale Verschiebung des Lagerzapfens.
Der besondere Vorteil dieser Konstruktion liegt darin,
daß zur Feststellung des Lagerzapfens nur eine einzige
Schraube betätigt zu werden braucht, d. h. diese Bauform
ist besonders anwenderfreundlich.

Bei einem Arbeitsständer, bei dem die Säule am hinteren
Rand der Grundplatte angeordnet ist, ist der Erfindung
zufolge bevorzugt vorgesehen, daß die Grundplatte eine
vor und eine neben der Säule liegende Arbeitsfläche aufweist, die ineinanderübergehen. Zu diesem Zweck kann die Grundplatte etwa quadratisch sein und die Säule etwa im Seitenteilungsverhältnis 2:1 außermittig angeordnet sein. Alternativ kann aber auch die Grundplatte einen winkelförmigen Grundriß aufweisen und die Säule an der inneren Winkelecke angeordnet sein. Der Projektions-Abstand zwischen Säule und Zentrum des Maschinenhalters entspricht dabei vorteilhafterweise etwa der halben Seitenlänge der Grundplatte. Bei diesem Aufbau des Arbeitsständers ist der Tatsache Rechnung getragen, daß mit dem Arbeitsständer nach der Erfindung nicht nur einfache Bohr-, sondern auch Fräsarbeiten verschiedenster Art ausgeführt werden können. Die Größe der Arbeitsplatte und die Anordnung der Säule kann dabei völlig auf die Erfordernisse einer günstigen Werkstückbearbeitung ausgerichtet sein, da auf die Größe der von dem Arbeitsständer aufzunehmenden Drehmomente keine Rücksicht genommen zu werden braucht.

In Ausgestaltung der Erfindung kann ferner vorgesehen werden, daß die Grundplatte eine angeformte, längsgeschlitzte, zylindrische Aufnahmehülse aufweist, innerhalb der die Säule betriebsmäßig dreheinstellbar ist und deren Hälften als Klemmbacken ausgebildet sind.

Schließlich kann der Erfindung zufolge die Grundplatte nahe der Säule mit einem oder mit mehreren Aufnahmelöchern für Imbus-Schlüssel und mit Rillen und/oder Stegen zur abrollsicheren Ablage von Bohrern oder dgl. versehen sein.

Die Erfindung wird im folgenden anhand der Zeichnung näher beschrieben. In der Zeichnung zeigen :

Fig. 1 einen Arbeitsständer mit eingespannter Handbohrmaschine in Seitenansicht,

Fig. 2 den Stellkopf des Arbeitsständers gemäß einer Blickrichtung II in Fig. 1,

Fig. 3 einen Schnitt durch Lagerbock und Führungsplatte des Arbeitsständers entlang einer Linie III-III in Fig. 1,

Fig. 4 einen Arbeitsständer mit axialer Verschraubung des Lagerzapfens der Führungsplatte in Seitenansicht,

Fig. 5 einen Schnitt durch Lagerbock und Führungsplatte des Arbeitsständers entlang einer Linie V-V in Fig. 4,

Fig. 6 in Draufsicht eine weitere Ausführungsform der Grundplatte des Arbeitsständers und

Fig. 7 einen Horizontalschnitt durch die Grundplatte nach Fig. 6 im Bereich der Säulenlagerung.

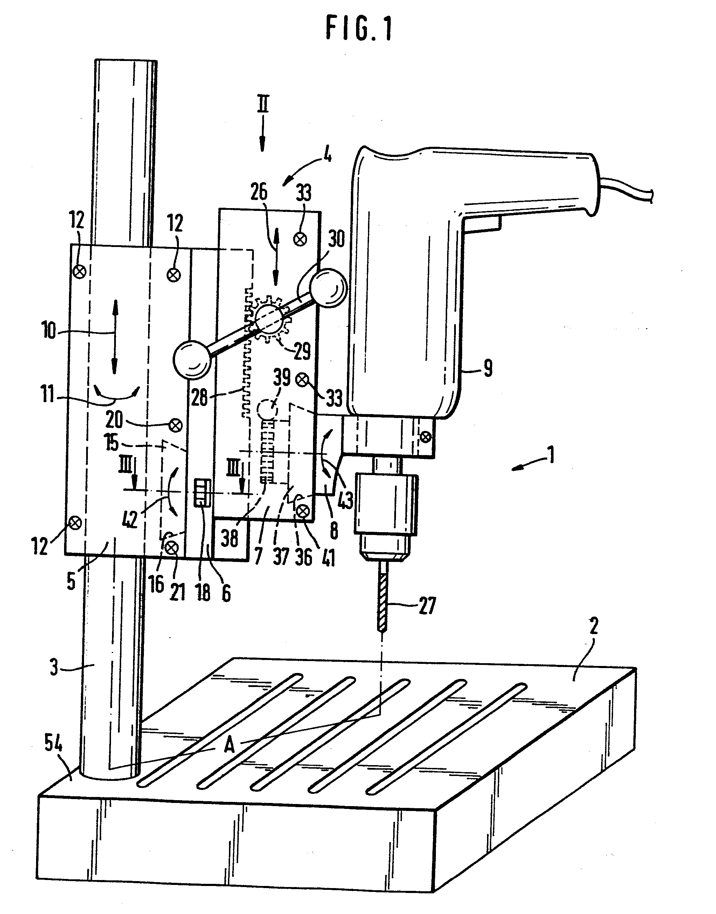

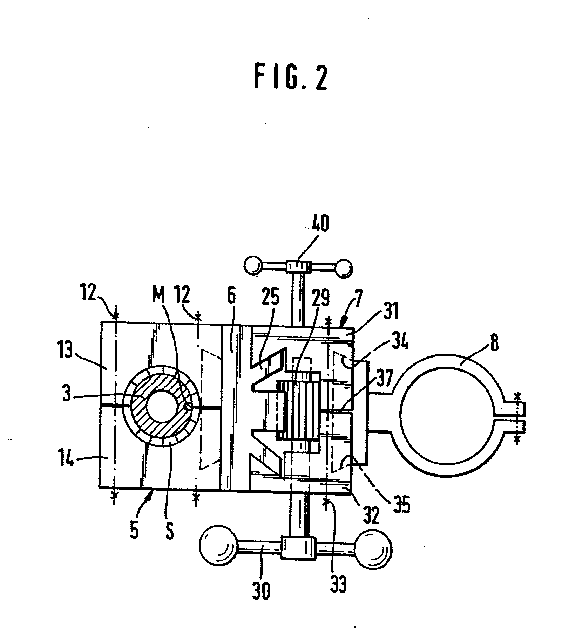

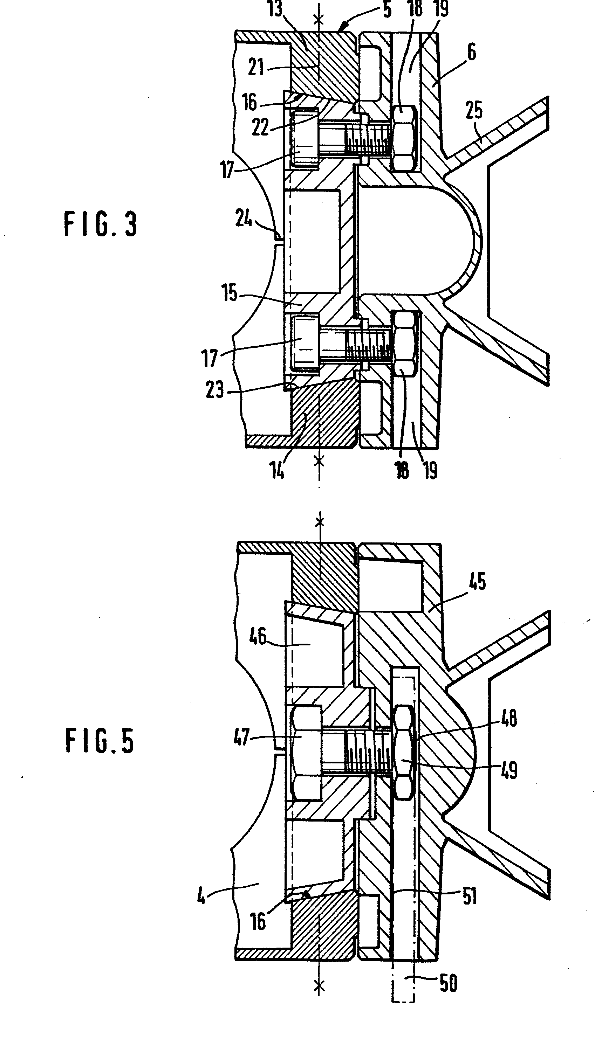

Fig. 1 zeigt einen Arbeitsständer 1, welcher aus einer Grundplatte 2, einer Säule 3 sowie einem Stellkopf 4 besteht. Der Stellkopf 4 setzt sich im einzelnen aus einem Lagerbock 5, einer Führungsplatte 6, einem Hubschlitten 7 und einem Maschinenhalter 8 zusammen. In den Maschinenhalter 8 kann z. B. eine Handbohrmaschine 9 eingespannt werden. Der Lagerbock 5 kann auf der Säule 3 in vertikaler Richtung 10 auf- und ab geschoben werden, sowie gemäß den Pfeilen 11 um diese geschwenkt werden. Die Feststellung auf der Säule 3 erfolgt dabei über die Spannschrauben 12, welche die beiden Gehäusehälften 13, 14 des Lagerbocks 5 gegeneinanderspannen; vergleiche Fig. 2. Die Führungsplatte 6 ist mit einem kegelstumpfförmigen, nach außen hin breiter werdenden Lagerzapfen 15 versehen, welcher in einem Drehlager 16 am Lagerbock 5 gelagert ist. Der Lagerzapfen 15 ist dabei mit Hilfe von zwei Schrauben 17 sowie Muttern 18 mit der Führungsplatte 6 verschraubt, wobei die Muttern 18 in Führungsschlitzen 19 geführt und damit am Verdrehen gehindert werden. Die getrennte Ausführung von Führungsplatte 6 und Lagerzapfen 15 erleichtert Fertigung und Montage dieser Teile. In der Ausführung gemäß den Fig. 1 und 3 erfolgt die Feststellung des Lagerzapfens 15 im Drehlager 16 durch ein Anziehen der Spannschrauben 20 und 21, wodurch die Gehäusehälften 13, 14 und damit die halben Konusschalen 22, 23 gegeneinandergepreßt werden. Werden die beiden Gehäusehälften 13, 14 so gearbeitet, daß sie im gelösten Zustand des Lagerzapfens 15 im Bereich der Spannschrauben 20 aneinanderliegen und im Bereich der Spannschrauben 21 einen Spalt 24 aufweisen, so kann bei der Wahl geeigneter Fertigungstoleranzen die Feststellung des Lagerzapfens allein durch Betätigen der Spannschraube 21 erfolgen.

Die Führungsplatte 6 weist eine prismatische Führungsbahn 25 auf, entlang derer der Hubschlitten 7 in der Richtung 26 verschiebbar ist. Diese Bewegung des Hubschlittens 7 bewirkt einen Vorschub des Werkzeugs 27 und kann über eine Zahnstange 28, ein Ritzel 29 sowie einen Steuerhebel 30 kontrolliert werden; vergleiche Fig. 1 und 2.

Ebenso wie der Lagerbock 5 ist auch der Hubschlitten 7 aus zwei Hälften 31, 32 gefertigt, die über Spannschrauben 33 aneinandergepreßt werden können. Die Gehäusehälften 31, 32 weisen jeweils eine halbe Konusschale 34, 35 auf, die zusammen ein Drehlager 36 für den kegelstumpfförmigen Lagerzapfen 37 des Maschinenhalters 8 bilden. Der Lagerzapfen 37 des Maschinenhalters 8 trägt an seinem freien Ende ein koaxiales Schneckenrad 38, in das eine im Hubschlitten 7 gelagerte Verstellschnecke 39 eingreift. Die Verstellschnecke 39 wird ihrerseits über den Drehhebel 40 betätigt. Die Feststellung des Lagerzapfens 37 im Drehlager 36 erfolgt über die Spannschraube 41.

Insgesamt ist die Maschine 9 in einer vertikalen Ebene in zweifacher Weise verschwenkbar : Zum einen ist eine Drehung um den Lagerzapfen 15 in Richtung der Pfeile 42 möglich, was eineVeränderung der Vorschubrichtung 26 zur Folge hat. Zum anderen bewirkt eine Verdrehung des Lagerzapfens 37 gemäß den Pfeilen 43 eine Verschwenkung der Maschine 9 relativ zur Vorschubrichtung 26. Neben der in Fig. 1 gezeigten einfachen Grundstellung der Maschine 9, wie man sie z. B. beim senkrechten Bohren benötigt, ergeben sich somit vielfältige Einsatzmöglichkeiten, die durch die Verstellbarkeit des Lagerbockes 5 an der Säule 3 zusätzlich erweitert werden. Das Werkzeug 27 kann dabei insbesondere bei Fräsarbeiten in Positionen kommen, die eine hohe Momentenbelastung der Drehlager 16,36 zur Folge haben können, die aber bei der Konstruktion nach der Erfindung sicher aufgefangen werden.

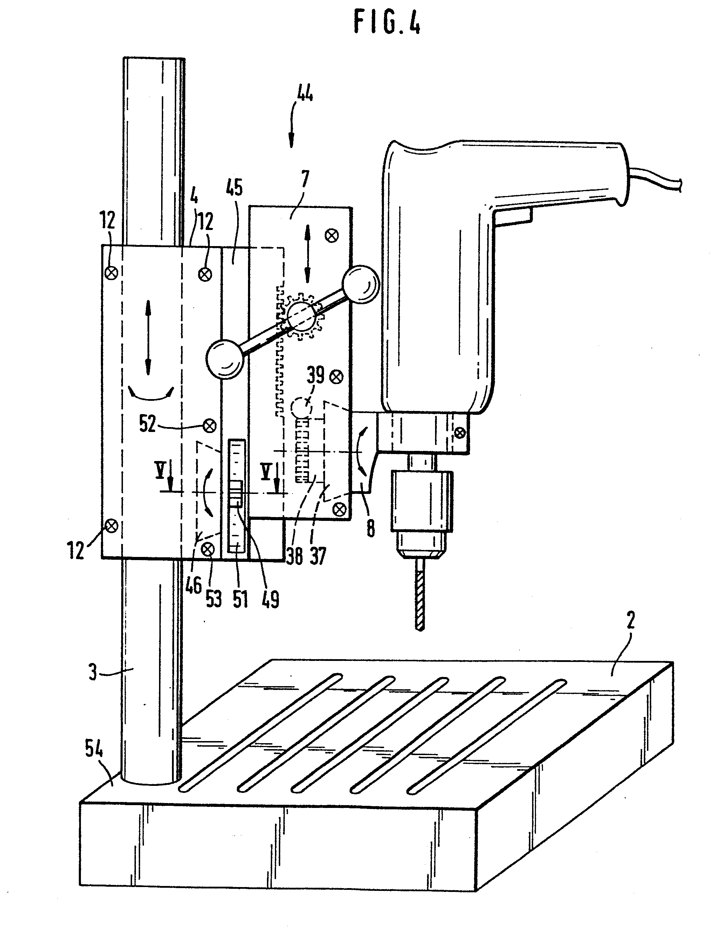

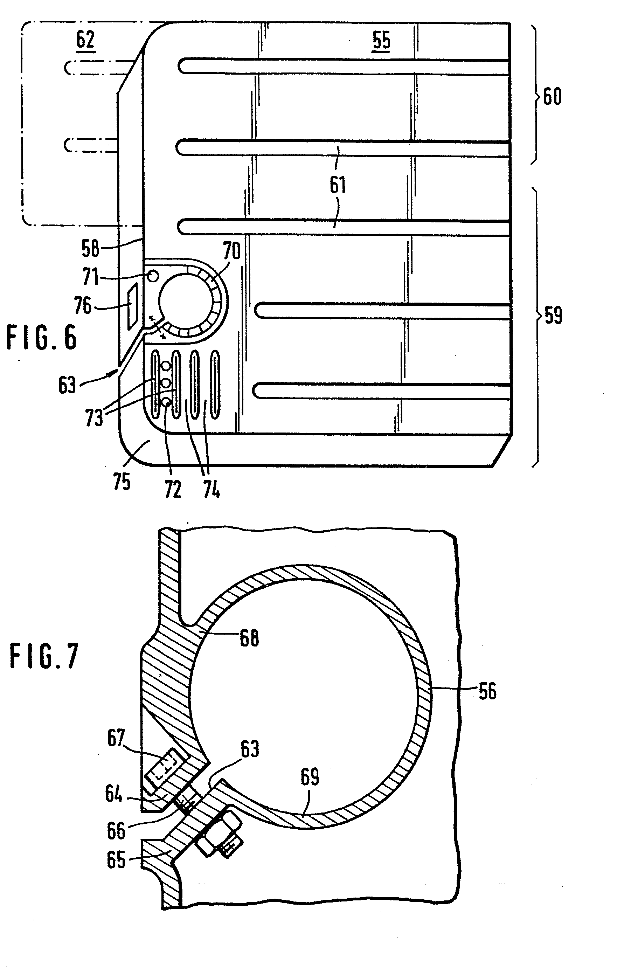

In der horizontalen Ebene ist die Maschine um die Säule 3 dreheinstellbar, wozu an der Oberseite des Lagerbockes 5 eine Skala S und an der Säule 3 eine Markierungsnut M vorgesehen sind. Fig. 4 zeigt einen Arbeitsständer 44, dessen Grundplatte 2, Säule 3, Lagerbock 4, Hubschlitten 7 sowie Maschinenhalter 8 mit dem Ausführungsbeispiel nach Fig. 1 identisch sind. Neu ist lediglich die Führungsplatte 45 sowie der kegelstumpfförmige Lagerzapfen 46. Der Lagerzapfen 46 ist, wie in Fig. 5 genauer gezeigt, durch eine zentrale axiale Schraube 47 an die Führungsplatte 45 angeschraubt. An dem Betätigungsende 48 der Schraube 47 ist eine Mutter 49 aufgesetzt, die über ein strichpunktiert angedeutetes Drehwerkzeug bzw. einen Drehgriff 50 betätigt werden kann. Ein Anziehen oder Lösen dieser Schraube 47 bewirkt eine Festspannung bzw. Lockerung des Lagerzapfens 46 im Drehlager 16. Damit genügend Platz zur Betätigung der Schraube 47 bleibt, weist die Führungsplatte 45 einen seitlichen Spalt 51 auf. Bei dieser Konstruktion ist die Festspannung bzw. Lockerung des Lagerzapfens 46 besonders einfach, da nur eine einzige Schraube 47 betätigt zu werden braucht. Bei der Wahl einer geeigneten Gewindesteigung genügt dabei ein einfaches Umlegen des Dreh-griffes 50 zum Lösen bzw. Feststellen des Lagerzapfens 46. Die Spannschrauben 52, 53 dienen hier lediglich dazu, bei der ersten Montage ein geeignetes Lagerspiel einzustellen, werden aber bei der Feststellung des Lagerzapfens 46 im Betrieb nicht mehr benötigt. Selbstverständlich kann eine Konstruktion nach den Fig. 4 und 5 für den Lagerzapfen 46 auch auf den Lagerzapfen 37 des Maschinenhalters 8 übertragen werden. Umgekehrt könnten ein Schneckenrad 38 und eine Verstellschnecke 39 auch für die Lagerzapfen 15 bzw. 46 der Führungsplatten 6 bzw. 45 übernommen werden.

Die technischen Möglichkeiten der Arbeitsständer 1 bzw. 44 in den Fig. 1 und 4 können dadurch in besonderer Weise

0139819

genutzt werden, daß die Säule 3 in einem Eckbereich 54 der etwa quadratischen Grundplatte 2 eingelassen ist und daß der Abstand A zwischen Säule 3 und Maschinenhalter 8 etwa der halben Kantenlänge der Grundplatte 2 entspricht.

Die Fig. 6 und 7 veranschaulichen eine abgewandelte Ausführungsform der Grundplatte 55 des Arbeitsständers. Die aus Guß bestehende Grundplatte ist mit einer angeformten Aufnahmehülse 56 für die Säule 3 versehen, welche am hinteren Rand 58 der Grundplatte außermittig mit einem Seitenteilungsverhältnis von etwa 2:1 angeordnet ist. Die insgesamt etwa quadratische Grundplatte 55 umfaßt eine wie üblich sich vor der Säule erstreckende Arbeitsfläche 59 und eine daneben liegende und bis neben die Säule sich erstreckende weitere Arbeitsfläche 60, in denen wie üblich Schlitze 61 zur Anbringung von Werkstück-Festspannelementen oder dgl. angeordnet sind.

Wie in Fig. 6 strichpunktiert angedeutet ist, kann die Neben-Arbeitsfläche sich auch noch gemäß einer abgewandelten Ausführungsform über die Hinterkante 58 hinaus erstrecken, so daß sich eine Grundplatte 62 von winkelförmigem Grundriß ergibt, an deren innerer Winkelecke die Säule liegt.

Die Aufnahmehülse 56 für die Säule ist mit einem Längsschlitz 63 versehen, wobei die Schlitzränder mit abgewinkelten Flanschen 64, 65 versehen sind, die durch eine
Schraube 66 mit Imbuskopf 67 zusammenspannbar sind, so
daß die Säule zur Dreheinstellung betriebsmäßig zwischen
den Spannbacken 68 und 69 der Hülse 56 festspannbar bzw.
lockerbar ist. An der Grundplatte ist eine die Aufnahmeöffnung für die Säule umschließende Skala 70 vorgesehen.
Ferner ist die Grundplatte in der Nähe der Säule mit Aufnahmelöchern 71, 72 für Imbus-Schlüssel und mit erhabenen
Stegen 73 und dazwischenliegenden Rillen 74 zur abrollsicheren Ablage von Bohrern oder dgl. versehen.

Patentansprüche

1. Arbeitsständer für eine Handbohrmaschine ( 9 ) mit einem auf einer Säule ( 3 ) höhenverstellbaren Lagerbock ( 5 ), einer um eine horizontale Achse schwenkbar am Lagerbock ( 5 ) gelagerten Führungsplatte ( 6 ), einem in einer prismatischen Führungsbahn der Führungsplatte ( 6 ) verschiebbaren Hubschlitten ( 7 ) und einem um eine horizontale Achse schwenkbar am Hubschlitten ( 7 ) gelagerten Maschinenhalter ( 8 ), dadurch gekennzeichnet, daß die Führungsplatte ( 6 ) und der Maschinenhalter ( 8 ) jeweils mit einem kegelstumpfförmigen, nach außen hin breiter werdenden Lagerzapfen ( 15, 37 ) in zugeordneten, konischen Drehlagern ( 16, 36 ) am Lagerbock ( 5 ) bzw. Hubschlitten ( 7 ) gelagert sind.

2. Arbeitsständer nach Anspruch 1, dadurch gekennzeichnet, daß der Lagerbock ( 5 ) und der Hubschlitten ( 7 ) jeweils aus zwei parallel zu ihrer Verschieberichtung und zur Achse des konischen Drehlagers ( 16, 36 ) geteilten und unter Einfassung jeweils eines der Lagerzapfen ( 15, 37 ) zusammengespannten Gehäuseteilen (13, 14 ; 31, 32 ) mit jeweils einer halben Konusschale ( 22, 23 ; 34, 35 ) bestehen.

3. Arbeitsständer nach Anspruch 2, dadurch gekennzeichnet, daß die Konusschalen ( 22, 23 ; 34, 35 ) der beiden Gehäuseteilen ( 13, 14 ; 31, 32 ) durch eine oder mehrere, eng an den Konusschalen vorbeiführende Spannschrauben ( 21, 41 ) betriebsmäßig an dem Lagerzapfen ( 15, 37 ) festspannbar bzw. von diesem lockerbar sind.

4. Arbeitsständer nach Anspruch 3, dadurch gekennzeichnet, daß der Lagerzapfen ( 37 ) des Maschinenhalters ( 8 ) an seinem freien Ende ein koaxiales Schneckenrad ( 38 ) trägt, in das eine im Hubschlitten ( 7 ) gelagerte Verstellschnecke ( 39 ) eingreift.

5. Arbeitsständer nach Anspruch 2, dadurch gekennzeichnet, daß der kegelstumpfförmige Lagerzapfen ( 46 ) der Führungsplatte ( 45 ) durch eine zentrale axiale Schraube ( 47 ) an die Führungsplatte ( 45 ) angeschraubt ist, daß das Betätigungsende ( 49 ) der Schraube ( 47 ) von der Seite her zwecks Anbringung eines Drehwerkzeuges ( 50 ) oder Dreh-Griffes zugänglich ist und daß der Lagerzapfen ( 46 ) durch Betätigen der Schraube ( 47 ) betriebsmäßig im Drehlager ( 16 ) festspannbar oder lockerbar ist.

0139819

6. Arbeitsständer, insbesondere nach einem der Ansprüche 1 bis 5, bei dem die Säule am hinteren Rand der Grundplatte angeordnet ist, dadurch gekennzeichnet, daß die Grundplatte (55) eine vor und neben der Säule (3) liegende Arbeitsfläche (59, 60) aufweist, die ineinander übergehen.

7. Arbeitsständer nach Anspruch 6, dadurch gekennzeichnet, daß die Grundplatte (55) etwa quadratisch ist und daß die Säule (3) im Seitenteilungsverhältnis 2:1 außermittig angeordnet ist.

8. Arbeitsständer nach Anspruch 6, dadurch gekennzeichnet, daß die Grundplatte (62) einen winkelförmigen Grundriß aufweist und daß die Säule (3) an der inneren Winkelecke angeordnet ist.

9. Arbeitsständer nach einem der Ansprüche 6 bis 8, dadurch gekennzeichnet, daß der Projektions-Abstand (A) zwischen Säule (3) und Zentrum des Maschinenhalters (8) etwa der halben Seitenlänge der Grundplatte (55) entspricht.

0139819

10. Arbeitsständer nach einem der Ansprüche 6 bis 9, dadurch gekennzeichnet, daß die Grundplatte (55) eine angeformte, längsgeschlitzte Aufnahmehülse (56) aufweist, innerhalb der die Säule (3) betriebsmäßig dreheinstellbar ist und deren Hälften als Klemmbacken (68, 69) ausgebildet sind.

11. Arbeitsständer nach einem der Ansprüche 1 bis 10, dadurch gekennzeichnet, daß die Grundplatte (55) nahe der Säule (3) mit einem oder mit mehreren Aufnahmelöchern (71, 72) für Imbusschlüssel versehen ist.

12. Arbeitsständer nach einem der Ansprüche 1 bis 11, dadurch gekennzeichnet, daß die Grundplatte (55) nahe der Säule (3) mit Rillen (74) und/oder Stegen (73) zur abrollsicheren Ablage von Bohrern oder dgl. versehen ist.

0139819

1/5

FIG.1

# FIG. 2

0139819

3 / 5

FIG.3

FIG.5

# FIG.4

FIG.6

FIG.7